# EUROPÄISCHE PATENTSCHRIFT

(11) **EP 0 989 002 B1**
(45) Veröffentlichungstag und Bekanntmachung des Hinweises auf die Patenterteilung: **03.12.2003**
(21) Anmeldenummer: 98118067.2
(22) Anmeldetag: 24.09.1998
(51) Int. Cl.: B60H 1/00, B60H 1/04

(54) **Verfahren zum Heizen eines Kraftfahrzeug-Fahrgastraumes und Wärmetauscher für Kraftfahrzeuge mit zusätzlicher Wärmequelle**
Method for heating a vehicle passenger compartment and heat exchanger for vehicles with additional heat source
Procédé de chauffage de l'habitacle d'un véhicule automobile et échangeur de chaleur pour véhicule automobile avec une source de chaleur additionelle

(43) Veröffentlichungstag der Anmeldung: 29.03.2000
(73) Patentinhaber: Ford Global Technologies, Inc., Dearborn, Michigan 48126 (US)
(72) Erfinder: Himmelsbach, Johann, Dr., 51789 Lindlar (DE)
(74) Vertreter: Bonsmann, Manfred, Dipl.-Ing.

(56) Entgegenhaltungen:
- EP-A- 0 467 130
- WO-A-96/06748
- DE-A- 19 800 756
- JP-A- 60 148 715
- US-A- 5 203 498
- US-A- 5 762 266
- PATENT ABSTRACTS OF JAPAN vol. 014, no. 237 (M-0976), 21. Mai 1990 & JP 02 063917 A (AISIN SEIKI CO LTD), 5. März 1990

## Beschreibung

Die Erfindung bezieht sich auf ein Verfahren zum Heizen eines Kraftfahrzeug-Fahrgastraumes, insbesondere beim Kaltstart oder bei ähnlichen Bedingungen, sowie auf Kühl- und Heizungskreisläufe hierfür, wobei das Kraftfahrzeug eine mit Kühlmittel gekühlte Brennkraftmaschine aufweist, deren Kühlmittel über eine Kühlmittel-Heizeinrichtung und einen dieser nachgeschalteten Heizungs-Wärmetauscher zirkuliert. Außerdem bezieht sich die Erfindung auf einen Heizungs-Wärmetauscher zur Verwendung in solchen Verfahren oder Kühl- und Heizungskreisläuf en.

Zur Heizung des Fahrgastraumes eines Kraftfahrzeuges wird üblicherweise das zur Kühlung der Brennkraftmaschine verwendete und von dieser erwärmte Kühlmittel zu einem Heizungs-Wärmetauscher geführt, in dem von dem Kühlmittel Wärme auf Luft übertragen wird, die dann in den Fahrgastraum eingeleitet wird. Vom Heizungs-Wärmetauscher aus kann das Kühlmittel entweder direkt oder über einen Kühler, der dem Kühlmittel weitere Wärme entzieht, zur Brennkraftmaschine zurückgeleitet werden. Falls eine Heizung des Fahrgastraumes nicht gewünscht ist, kann das Kühlmittel von der Brennkraftmaschine direkt zum Kühler und von dort zurück zur Brennkraftmaschine geleitet werden.

Während der Aufwärmphase der Brennkraftmaschine oder bei extrem kalten Witterungsbedingungen ist die Temperatur des Kühlmittels nicht ausreichend hoch, um ein zufriedenstellendes Heizen des Fahrgastraumes zu ermöglichen, d. h. es liegt ein Fahrgastraum-Heizungsdefizit vor.

Zur Erhöhung der Kühlmitteltemperatur für den Durchlauf durch den Heizungs-Wärmetauscher ist es bekannt, das Kühlmittel nach dem Austritt aus der Brennkraftmaschine durch eine Kühlmittel-Heizeinrichtung zu leiten, ehe es den Heizungs-Wärmetauscher durchläuft. Hierdurch wird zwar eine verbesserte Beheizung des Fahrgastraumes und auch eine Verkürzung der Aufwärmphase der Brennkraftmaschine erzielt, jedoch ist die Heizleistung in der Aufwärmphase immer noch relativ schlecht, da die Kühlmittel-Aufwärmgeschwindigkeit doch überwiegend von der Wärmeträgheit der Brennkraftmaschine bestimmt ist. Das bedeutet, daß das Kühlmittel von der noch relativ kalten Brennkraftmaschine wieder stark abgekühlt wird und daher der Großteil der Energie der Kühlmittel-Heizeinrichtung zum Aufwärmen der Brennkraftmaschine herangezogen wird, und nicht für die Fahrgastraumheizung.

Aus der JP-A-60148715 ist ein Kühl- und Heizungskreislauf bekannt, der eine Brennkraftmaschine, eine Heizeinrichtung und einen Haupt-Heizungs-Wärmetauscher aufweist. Weiterhin ist parallel zur Heizeinrichtung und dem Haupt-Heizungs-Wärmetauscher ein Neben-Heizungs-Wärmetauscher in den Kreislauf geschaltet.

Die WO 96 06748 A offenbart einen Heizungs-Wärmetauscher für einen Kühl- und Heizungskreislauf, bei dem senkrecht verlaufende Wärmetauscherrohre an der Oberseite mit einer zweigeteilten Kammer und an der Unterseite mit einer einteiligen Kammer verbunden sind, wobei die beiden Kompartimente der oberen Kammer jeweils mit einer Zuleitung bzw. einer Ableitung verbunden sind.

Die US 5 203 498 offenbart einen umschaltbaren Heizungs-Wärmetauscher für einen Kühl- und Heizungskreislauf, in welchem je nach Einstellung die Wärmetauscherrohre für einen Hin- und Rückstrom von Kühlmittel oder alle parallel für einen Strom in eine Richtung genutzt werden können.

Die Aufgabe der vorliegenden Erfindung liegt darin, die Heizung eines Kraftfahrzeug-Fahrgastraumes mit geringem technischen Aufwand weiter zu verbessern, insbesondere beim Kaltstart oder bei ähnlichen Bedingungen.

Diese Aufgabe wird bei einem Verfahren der eingangs genannten Art dadurch gelöst, daß mindestens ein zweiter Heizungs-Wärmetauscher, vorzugsweise desselben Typs wie der erste Heizungs-Wärmetauscher, vorgesehen wird und zu dem ersten Heizungs-Wärmetauscher ein Kühlmittelstrom mit einer ersten Temperatur und zu dem zweiten Heizungs-Wärmetauscher ein Kühlmittelstrom mit einer zweiten Temperatur, die niedriger als die erste Temperatur ist, geleitet wird und die Kühlmittelströme dann der Brennkraftmaschine wieder zugeführt werden, und daß die Fahrgastraum-Heizungsluft zuerst durch den zweiten und anschließend durch den ersten Heizungswärmetauscher geleitet wird.

Durch die erfindungsgemäßen Maßnahmen wird der Fahrgastraum eines Kraftfahrzeuges auch dann wirksam geheizt, wenn die Temperatur des aus der Brennkraftmaschine austretenden Kühlmittels noch relativ niedrig ist. Mit dem Vorsehen eines zweiten Heizungs-Wärmetauschers, wobei aber nur der den ersten Heizungs-Wärmetauscher durchlaufende Kühlstrom durch eine Kühlmittel-Heizeinrichtung aufgeheizt wird, während der zweite Heizungs-Wärmetauscher von dem Kühlmittelstrom mit der in ihm ohne weitere Hilfsmittel vorhandenen Temperatur durchlaufen wird, wird eine erhebliche Erhöhung der Heizleistung allein dadurch erzielt, daß die Fahrgastraum-Heizungsluft zuerst durch den zweiten und dann durch den ersten Heizungs-Wärmetauscher geleitet wird. Auf diese Weise werden die Temperaturunterschiede zwischen der Kühlmitteltemperatur im zweiten Heizungs-Wärmetauscher und der in diesen eintretenden kalten Heizungsluft und zwischen der Kühlmitteltemperatur im ersten Heizungs-Wärmetauscher und der Temperatur der in diesen eintretenden, vorgewärmten Heizungsluft optimal ausgenutzt. Die Temperatur der aus dem ersten Heizungs-Wärmetauscher austretenden, d. h. in den Fahrgastraum eintretenden, Heizungsluft wird so beträchtlich erhöht, ohne daß hierzu eine höhere Heizleistung oder eine zweite Kühlmittel-Heizeinrichtung notwendig ist.

Vorzugsweise wird der aus der Brennkraftmaschine austretende Kühlmittelstrom vor der Kühlmittel-Heizeinrichtung in einen ersten Kühlmittelstrom mit niedriger Strömungsrate, der der Kühlmittel-Heizeinrichtung und dem ersten Heizungs-Wärmetauscher zugeleitet wird, und in einen zweiten Kühlmittelstrom mit hoher Strömungsrate geteilt, der dem zweiten Heizungs-Wärmetauscher zugeleitet wird.

Bei einem gattungsgemäßen Kühl- und Heizungskreislauf wird hierbei erfindungsgemäß vorgeschlagen, daß zu der Kühlmittel-Heizeinrichtung und zu dem dieser nachgeschalteten, ersten Heizungs-Wärmetauscher ein zweiter Heizungs-Wärmetauscher parallelgeschaltet ist, daß beide Heizungs-Wärmetauscher mit dem Kühlmitteleintritt der Brennkraftmaschine verbunden sind, daß ferner die Strömungsrate des Kühlmittels durch die Kühlmittel-Heizeinrichtung und den ersten Heizungs-Wärmetauscher geringer ist als die durch den zweiten Heizungs-Wärmetauscher, und daß die Fahrgastraum-Heizungsluft zuerst den zweiten Heizungs-Wärmetauscher und anschließend den ersten Heizungs-Wärmetauscher durchströmt.

Erfindungsgemäß kann aber auch ein zweiter Heizungs-Wärmetauscher vorgesehen sein, dessen Kühlmitteleintritt mit dem Kühlmittelaustritt der Brennkraftmaschine sowie dem des ersten Heizungs-Wärmetauschers und dessen Kühlmittelaustritt mit dem Kühlmitteleintritt der Brennkraftmaschine verbunden ist, wobei wiederum die Strömungsrate des Kühlmittels durch die Kühlmittel-Heizeinrichtung und den ersten Heizungs-Wärmetauscher geringer ist als die durch den zweiten Heizungs-Wärmetauscher und die Fahrgastraum-Heizungsluft zuerst den zweiten Heizungs-Wärmetauscher und anschließend den ersten Heizungs-Wärmetauscher durchströmt. In diesem Fall ist also der zweite Heizungs-Wärmetauscher zur Kühlmittel-Heizeinrichtung parallelgeschaltet und dem ersten Heizungs-Wärmetauscher nachgeschaltet.

Mit diesen Maßnahmen kann insbesondere ab dem mittleren Bereich der Aufwärmphase einer Brennkraftmaschine, beispielsweise ab Kühlmitteltemperaturen von 30°C eine wirksame Beheizung des Fahrgastraumes erzielt werden. Aufgrund der niedrigen Durchströmungsrate durch die Kühlmittel-Heizeinrichtung werden hohe Kühlmittel-Eintrittstemperaturen beim ersten Heizungs-Wärmetauscher erreicht. Dabei läuft der zweite Kühlmittelstrom mit der Temperatur durch den zweiten Heizungs-Wärmetauscher, mit der er aus der Brennkraftmaschine austritt.

Ebenfalls bevorzugt wird alternativ der aus der Brennkraftmaschine austretende Kühlmittelstrom nach dem Durchströmen der Kühlmittel-Heizeinrichtung und des ersten Heizungs-Wärmetauschers zu dem zweiten Heizungs-Wärmetauscher geleitet.

Bei einem gattungsgemäßen Kühl- und Heizungskreislauf wird hierbei erfindungsgemäß vorgeschlagen, dem ersten Heizungs-Wärmetauscher einen zweiten Heizungs-Wärmetauscher nachzuschalten, der ohne Einbindung des Kühler-Wärmetauschers mit dem Kühlmitteleintritt der Brennkraftmaschine verbindbar ist, und die Fahrgastraum-Heizungsluft zuerst den zweiten Heizungs-Wärmetauscher und anschließend den ersten Heizungs-Wärmetauscher durchströmen zu lassen.

Mit diesen Maßnahmen wird kurz nach dem Kaltstart, wenn in dem Kühlmittel noch keine signifikante Wärme verfügbar ist, beispielsweise unterhalb von 30°C, eine bestmögliche Heizung des Fahrgastraumes erreicht. Hierbei sind die beiden Heizungs-Wärmetauscher in Reihe geschaltet und wird die von der Kühlmittel-Heizeinrichtung erzeugte Wärme konzentriert an die Heizungsluft abgegeben.

Vorteilhafterweise wird mit steigender Kühlmitteltemperatur die Strömungsrate durch die Kühlmittel-Heizeinrichtung hindurch erhöht. Auf diese Weise wird eine Überhitzung des Kühlmittels verhindert. Diese Maßnahme könnte beispielsweise zum Tragen kommen, wenn die Austrittstemperatur des Kühlmittels aus der Brennkraftmaschine größer oder gleich 70°C beträgt.

Bei parallelgeschalteten Heizungs-Wärmetauschern beträgt in günstiger Weiterbildung der Erfindung die Strömungsrate des Kühlmittels durch die Kühlmittel-Heizeinrichtung und den ersten Heizungs-Wärmetauscher etwa 1/10 der Strömungsrate des Kühlmittels durch den zweiten Heizungs-Wärmetauscher. Es hat sich herausgestellt, daß bei diesem Verhältnis der Strömungsraten die Heizleistung noch einmal deutlich erhöht ist.

Zur Einstellung der Strömungsrate durch die Kühlmittel-Heizeinrichtung kann dabei zwischen dieser und dem ersten Heizungs-Wärmetauscher ein thermostatisch oder elektronisch gesteuertes Drosselventil geschaltet sein. Eine einfache Regelung bzw. Steuerung der Strömungsrate ist hierdurch möglich.

Alternativ kann in einer ebenfalls bevorzugten Ausführungsform der Erfindung ein Dreiwege-Ventil vorgesehen sein, dessen erster Einlaß mit dem Kühlmittelaustritt der Kühlmittel-Heizeinrichtung und dessen zweiter Einlaß mit dem Kühlmittelaustritt der Brennkraftmaschine verbunden ist und dessen Auslaß mit dem Kühlmitteleintritt des zweiten Heizungs-Wärmetauschers verbunden ist.

Erfindungsgemäß wird auch ein Heizungs-Wärmetauscher zur Verwendung in den vorbeschriebenen Verfahren und Kühl- und Heizungskreisläufen vorgeschlagen. Er umfaßt zwei in einem gemeinsamen Gehäuse angeordnete, nebeneinander liegende, gegeneinander wärmeisolierte Wärmetauscherkerne mit ersten und zweiten Enden, wobei das Gehäuse eine erste und eine zweite Öffnung, die jeweils zum ersten Ende eines der Wärmetauscherkerne führen und durch eine Trenneinrichtung voneinander getrennt sind, sowie eine dritte, für die zweiten Enden der Wärmetauscherkerne gemeinsame Öffnung aufweist. Solch ein Heizungs-Wärmetauscher kann einerseits wie zwei parallelgeschaltete Heizungs-Wärmetauscher eingesetzt werden, indem die beiden durch eine Trenneinrichtung getrennten Öffnungen als Einlässe für jeweils einen Kühlstrom eingesetzt werden und die beiden Wärmetauscherkerne gemeinsame Öffnung als ein gemeinsamer Auslaß benutzt wird, der über eine Kühlmittelleitung mit dem Kühlmitteleintritt der Brennkraftmaschine verbindbar ist. Es ist aber auch möglich, diesen erfindungsgemäßen Heizungs-Wärmetauscher wie zwei in Reihe geschaltete Heizungs-Wärmetauscher einzusetzen, indem die beiden Wärmetauscherkernen gemeinsame Öffnung durch einen Schalter geschlossen wird und die eine der beiden durch eine Trenneinrichtung getrennten Öffnungen als Einlaß und die andere dieser beiden Öffnungen als Auslaß verwendet wird, wobei der Kühlmittelstrom an der nunmehr geschlossenen, beiden Wärmetauscherkernen gemeinsamen Öffnung vorbeifließt.

Die Erfindung wird nachfolgend anhand der Zeichnung beispielshalber noch näher erläutert. Es zeigen:
- Figur 1: eine erste Ausführungsform eines erfindungsgemäßen Kühl- und Heizungskreislaufes, bei der eine Kühlmittel-Heizeinrichtung und ein Heizungs-Wärmetauscher zu einem weiteren Heizungs-Wärmetauscher parallelgeschaltet sind;
- Figur 2: für die verwendeten Heizungs-Wärmetauscher eine Kennkurve, bei der der Heiz-Wirkungsgrad gegen die Kühlmittel-Strömungsrate aufgetragen ist;
- Figur 3: eine weitere Ausführungsform eines erfindungsgemäßen Kühl- und Heizungskreislaufes, bei der einer Kühlmittel-Heizeinrichtung ein erster Heizungs-Wärmetauscher nachgeschaltet und ein zweiter parallelgeschaltet ist, dessen Kühlmitteleintritt mit dem Kühlmittelaustritt des ersten verbunden ist;
- Figur 4: die Ausführungsform aus Figur 1 mit einem zwischen der Kühlmittel-Heizeinrichtung und den beiden Heizungs-Wärmetauschern geschalteten Dreiwege-Ventil;
- Figur 5: die Ausführungsform aus Figur 1 mit einem zwischen der Kühlmittel-Heizeinrichtung und dem ersten Heizungs-Wärmetauscher geschalteten Drosselventil;
- Figur 6: eine weitere Ausführungsform eines erfindungsgemäßen Kühl- und Heizungskreislaufes, wobei zwei Heizungs-Wärmetauscher in Reihe geschaltet sind, und
- Figur 7: einen erfindungsgemäßen Heizungs-Wärmetauscher.

In den Figuren sind gleiche Elemente mit gleichen Bezugszeichen versehen.

Die in den Figuren gezeigten Kühl- und Heizungskreisläufe 1 für Kraftfahrzeuge weisen zunächst eine mit Kühlwasser bzw. Kühlmittel gekühlte Brennkraftmaschine 2 auf. Das in der Brennkraftmaschine 2 zirkulierende Kühlmittel wird zu einem Kühlmittelaustritt 3 geführt, an dem sich eine Kühlmittelleitung 4 anschließt, die zu einer Kühlmittel-Heizeinrichtung 5 und zu einem ersten Heizungs-Wärmetauscher 6 führt .

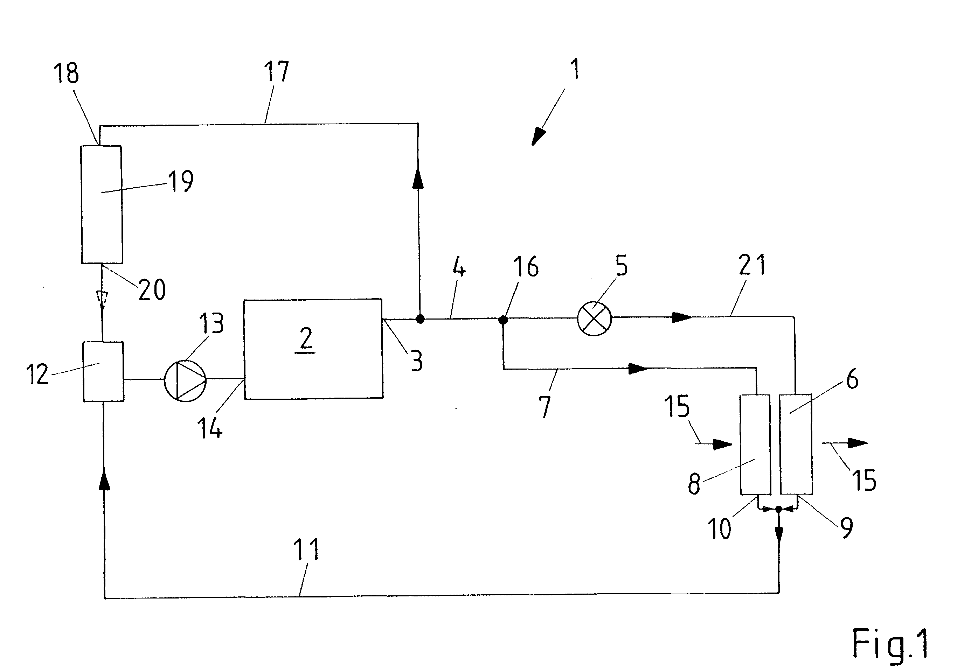

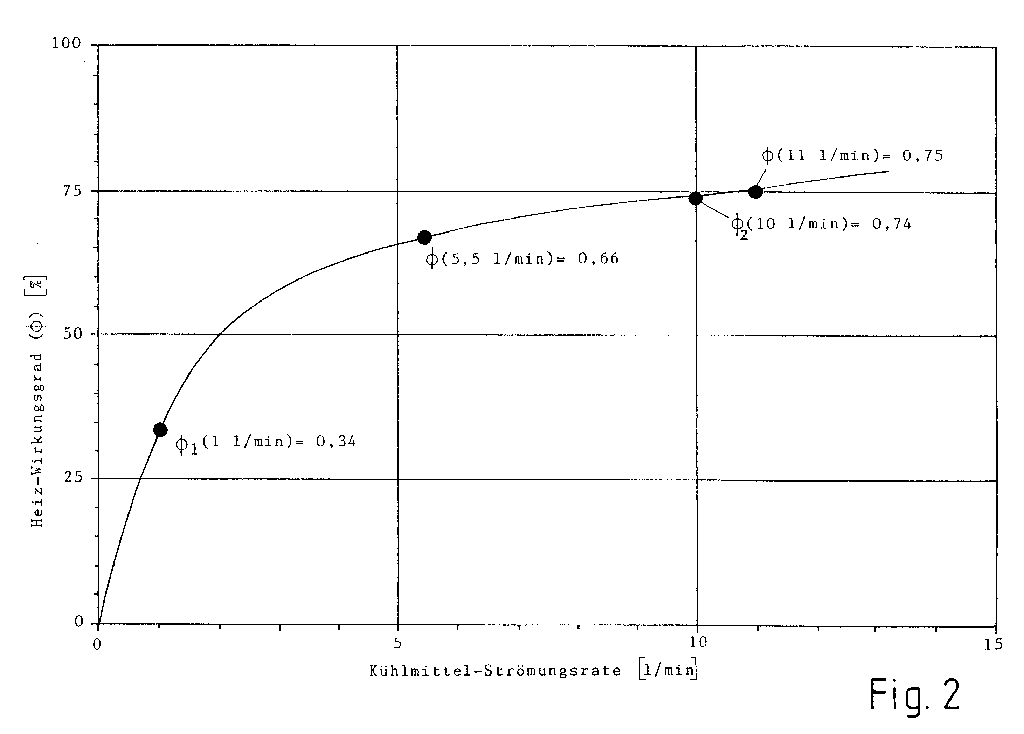

Bei dem aus Figur 1 ersichtlichen Ausführungsbeispiel zweigt in Strömungsrichtung vor der Kühlmittel-Heizeinrichtung 5 eine Kühlmittelleitung 7 ab, die zu einem zweiten Heizungs-Wärmetauscher 8 führt, der zu der Kühlmittel-Heizeinrichtung 5 und dem ersten Heizungs-Wärmetauscher 6 parallelgeschaltet ist. Die beiden Heizungs-Wärmetauscher 6, 8 sind gleich ausgeführt, d. h. sie weisen insbesondere die gleiche Heiz-Wirkungsgradskurve gemäß Fig. 2 auf. Die Kühlmittelaustritte 9, 10 beider Heizungs-Wärmetauscher 6, 8 sind an eine gemeinsame Kühlmittelleitung 11 angeschlossen, die über ein Thermostat 12 und eine Kühlmittelpumpe 13 zum Kühlmitteleintritt 14 der Brennkraftmaschine 2 zurückführt. Die Heizungsluft 15 wird zuerst durch den zweiten Heizungs-Wärmetauscher 8, dann durch den ersten Heizungs-Wärmetauscher 6 und von dort in den Fahrgastraum geleitet.

Von der zur Kühlmittel-Heizeinrichtung 5 führenden Kühlmittelleitung 4 zweigt vor der Verzweigung 16 der Kühlmittelleitung 7 zum zweiten Heizungs-Wärmetauscher 8 eine Kühlmittelleitung 17 zum Kühlmitteleintritt 18 eines Kühler-Wärmetauschers 19 ab, dessen Kühlmittelaustritt 20 mit dem Thermostat 12 verbunden ist. Mit dem Thermostat 12 kann eine Zirkulation des Kühlmittels durch den Kühler-Wärmetauscher 19 verhindert werden.

Zur Verdeutlichung der Heizleistung wird folgendes Zahlenbeispiel gegeben:

Aus der Brennkraftmaschine 2 trete der Kühlmittelstrom 4 mit einer Temperatur von 50°C und einer Strömungsrate von 11 l/min aus. Dieser Kühlmittelstrom 4 werde in einen Kühlmittelstrom 21 mit einer Strömungsrate von 1 l/min, der die Kühlmittel-Heizeinrichtung 5, die eine Leistung von 3 kW aufweise, und den ersten Heizungs-Wärmetauscher 6 durchläuft, sowie in einem zweiten Kühlmittelstrom 7 mit einer Strömungsrate von 10 l/min geteilt, der den zweiten Heizungs-Wärmetauscher 8 durchläuft. Der Wirkungsgrad von Heizungs-Wärmetauschern hängt von der Strömungsrate ab, so daß auch bei gleich ausgeführten Heizungs-Wärmetauschern die Wirkungsgrade bei unterschiedlichen Strömungsraten unterschiedlich sind.

Bei den im vorliegenden Beispiel eingesetzten Heizungs-Wärmetauschern 6, 8 liegen gemäß Figur 2 in Abhängigkeit von der Strömungsrate ein Wirkungsgrad φ₁ = 0,34 für eine Strömungsrate von 1 l/min und ein Wirkungsgrad φ₂ = 0,74 für eine Strömungsrate von 10 l/min vor. Hieraus ergibt sich bei einer Anfangstemperatur der in den zweiten Heizungs-Wärmetauscher 8 eintretenden Fahrgastraum-Heizungsluft 15 von T_{A} = 0°C eine Austrittstemperatur aus dem ersten Heizungs-Wärmetauscher 6 von T_{H} = 59,3°C. Dies bedeutet gegenüber dem Einsatz nur der Kühlmittel-Heizeinrichtung 5 und eines nachgeschalteten Heizungs-Wärmetauschers 6, die beide von dem aus der Brennkraftmaschine 2 austretenden Kühlmittelstrom 4 mit einer Strömungsrate von 11 l/min ( φ = 0,75) durchströmt werden, eine Steigerung um 44,3 % und gegenüber dem Einsatz einer Kühlmittel-Heizeinrichtung 5, der zwei parallelgeschaltete gleiche Heizungs-Wärmetauscher nachgeschaltet sind, die also jeweils von einem Kühlmittelstrom mit der Strömungsrate 5,5 l/min ( φ = 0,66) durchströmt werden, noch eine Steigerung von 15,4 %.

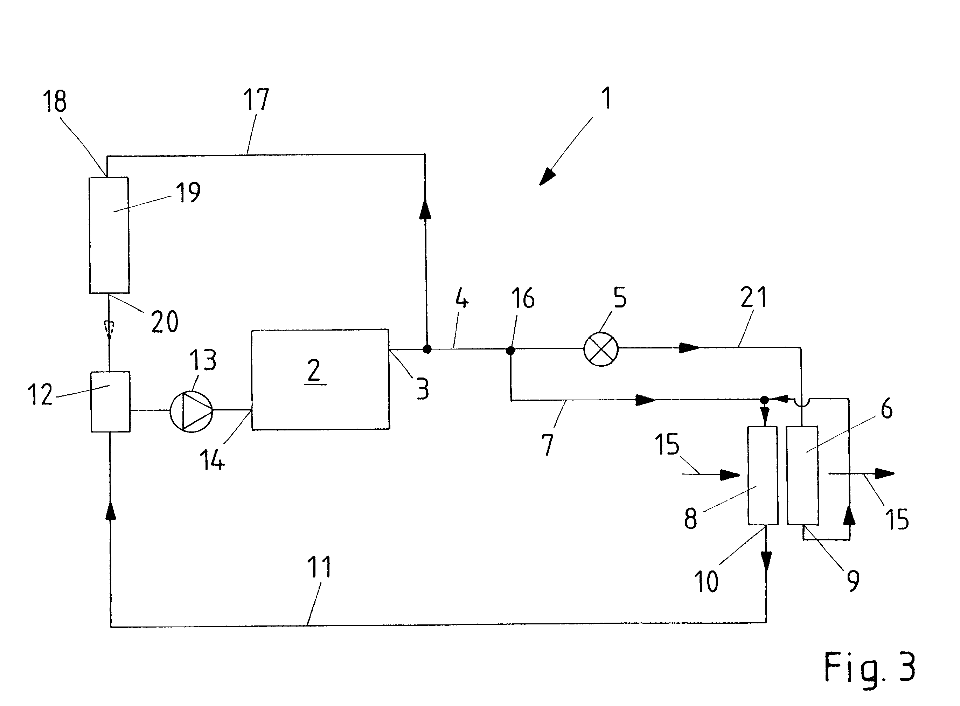

In einer Modifikation des Ausführungsbeispiels aus Figur 1 wird der aus dem ersten Heizungs-Wärmetauscher 6 austretende Kühlmittelstrom zum Kühlmitteleintritt des zweiten Heizungs-Wärmetauschers 8 geleitet (Figur 3), wo sich dieser Kühlmittelstrom (Strömungsrate: 1 l/min) mit dem weiterhin über die Verzweigung 16 und die Kühlmittelleitung 7 kommenden Kühlmittelstrom (Strömungsrate: 10 l/min) vereinigt. Bei dieser Ausführungsform wird der zweite Heizungs-Wärmetauscher 8 somit von einem Kühlmittelstrom mit einer Strömungsrate von 11 l/min durchlaufen. Über die Kühlmittelleitung 11 strömt das Kühlmittel vom zweiten Heizungs-Wärmetauscher 8 zur Brennkraftmaschine 2 zurück.

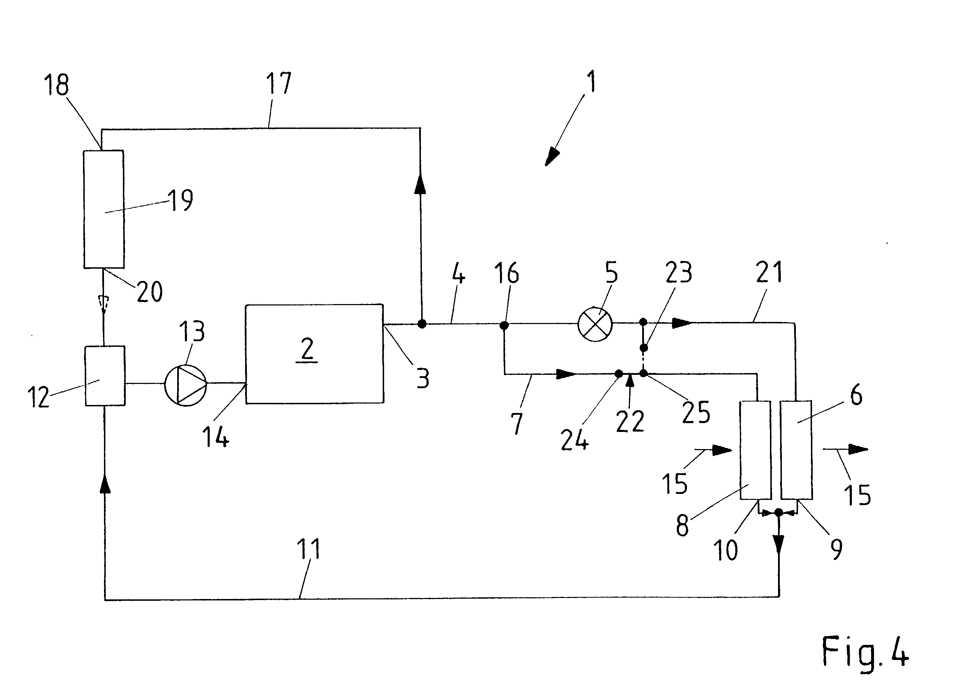

Bei der in Figur 4 dargestellten Variante ist zwischen der Kühlmittel-Heizeinrichtung 5 und den beiden Heizungs-Wärmetauschern 6, 8 ein Dreiwege-Ventil 22 geschaltet, dessen erster Einlaß 23 mit dem Kühlmittelaustritt der Kühlmittel-Heizeinrichtung 5 und dessen zweiter Einlaß 24 mit dem Kühlmittelaustritt 3 der Brennkraftmaschine 2 und dessen Auslaß 25 mit dem Kühlmitteleintritt des zweiten Heizungs-Wärmetauschers 8 verbunden ist. In der in Figur 4 durchgezogenen dargestellten Stellung des Dreiwege-Ventils 22 entspricht diese Variante der Schaltung aus Figur 1. In der punktiert dargestellten Stellung erfolgt auch eine Verzweigung in Strömungsrichtung hinter der Kühlmittel-Heizeinrichtung 5, wodurch die Strömungsrate durch die Kühlmittel-Heizeinrichtung 5 erhöht werden kann. Eine Überhitzung des Kühlmittels kann so vermieden werden, wenn die Austrittstemperatur des Kühlmittels aus der Brennkraftmaschine 2 eine vorgegebene Grenztemperatur überschreitet.

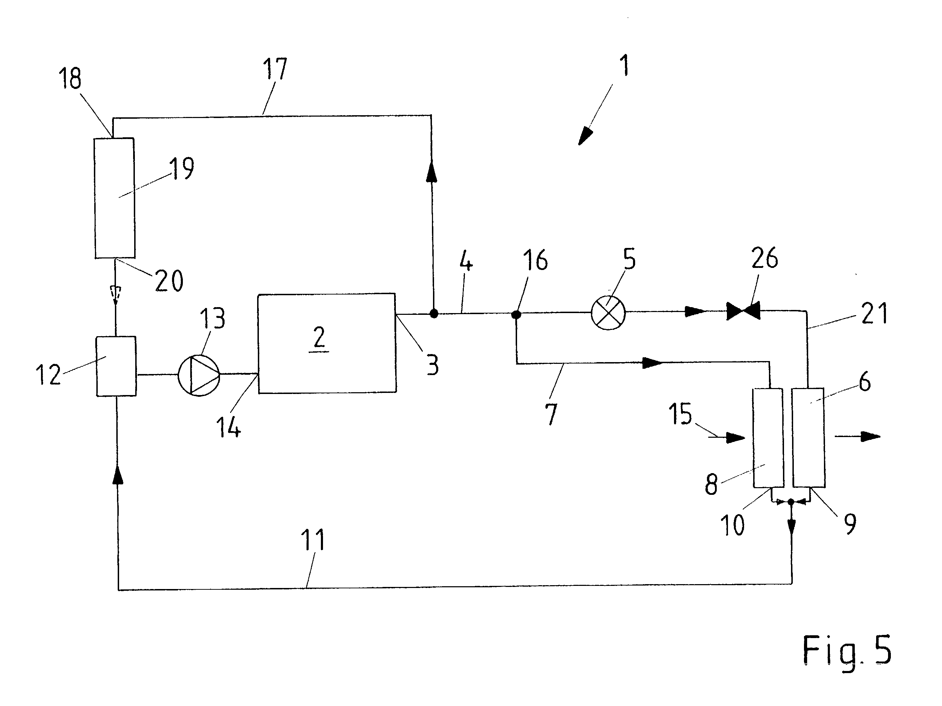

Gemäß Figur 5 ist zur Regelung bzw. Steuerung der Strömungsrate durch die Kühlmittel-Heizeinrichtung 5 und den ersten Heizungs-Wärmetauscher 6 ein Drosselventil 26 vorgesehen, das entweder thermostatisch oder elektronisch eingestellt werden kann.

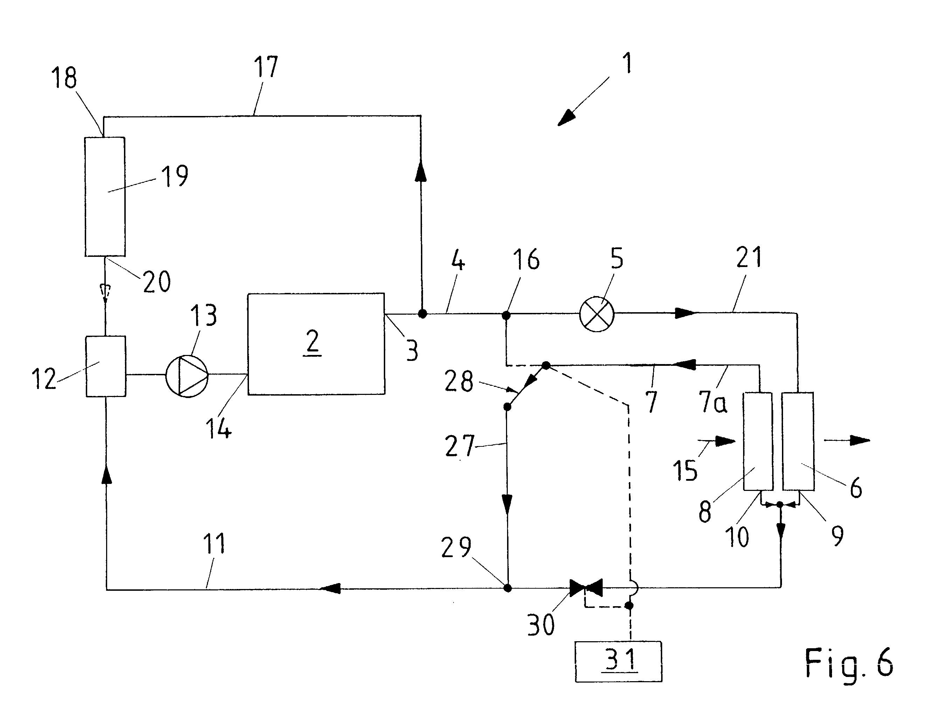

Die in Figur 6 dargestellte Ausführungsform wird bevorzugt bei Austrittstemperaturen des Kühlmittels aus der Brennkraftmaschine 2 eingesetzt, die gleich oder kleiner als 30°C sind. In diesem Fall werden die beiden Heizungs-Wärmetauscher 6, 8 in Reihe geschaltet. Hierzu wird bei einem Kühl- und Heizungskreislauf 1 gemäß Figur 1 eine Überbrückungs-Kühlmittelleitung 27 vorgesehen, die in die Kühlmittelleitung 11 mündet, die die Kühlmittelaustritte 9, 10 der Heizungs-Wärmetauscher 6, 8 mit dem Kühlmitteleintritt 14 der Brennkraftmaschine 2 verbindet, und zu der vor der Kühlmittel-Heizeinrichtung 5 zum zweiten Heizungs-Wärmetauscher 8 abzweigenden Kühlmittelleitung 7 führt. Um die beiden Heizungs-Wärmetauscher 6, 8 in Reihe zu schalten, wird zum einen die Verzweigungsleitung 7 zum zweiten Heizungs-Wärmetauscher 8 durch einen ersten Schalter 28 getrennt und der an den zweiten Heizungs-Wärmetauscher 8 angeschlossene Abschnitt 7a dieser Kühlmittelleitung 7 an die Überbrückungs-Kühlmittelleitung 27 angeschlossen. zum anderen wird die von den Heizungs-Wärmetauschern 6, 8 zur Brennkraftmaschine 2 führende Kühlmittelleitung 11 vor der Einmündung 29 der Überbrückungs-Kühlmittelleitung 27 durch einen zweiten Schalter 30 geschlossen. Hierdurch fließt das von der Brennkraftmaschine 2 bzw. von der Kühlmittel-Heizeinrichtung 5 kommende Kühlmittel zuerst durch den ersten Heizungs-Wärmetauscher 6 (wie in Figur 1), anschließend durch den zweiten Heizungs-Wärmetauscher 8 und die Kühlmittelleitung 7a in der gegenüber der Figur 1 entgegengesetzten Richtung und dann über die Überbrückungs-Kühlmittelleitung 27 und die Kühlmittelleitung 11 zurück zur Brennkraftmaschine 2. Die Heizungsluft 15 wird dabei ebenfalls zuerst durch den zweiten Heizungs-Wärmetauscher 8 und dann durch den ersten Heizungs-Wärmetauscher 6 geleitet.

Die beiden Schalter 28, 30 sind an eine elektronische Maschinensteuerung 31 angeschlossen und von dieser in Abhängigkeit vorgegebener Betriebsparameter betätigbar.

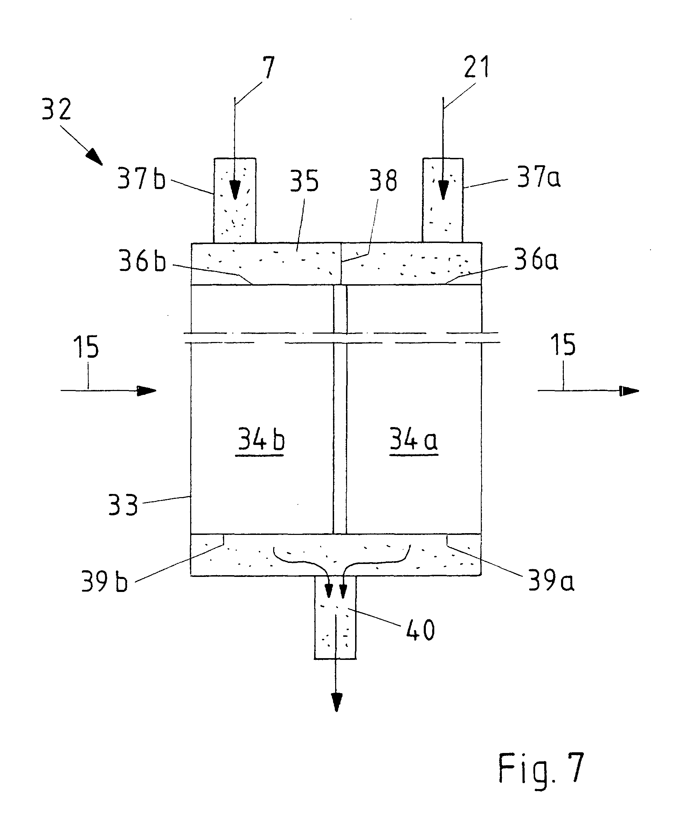

Figur 7 zeigt ein Ausführungsbeispiel eines erfindungsgemäßen Heizungs-Wärmetauschers 32, das zwei in einem Gehäuse 33 zusammengefaßte Wärmetauscherkerne 34a, 34b aufweist. Die Wärmetauscherkerne 34a, 34b liegen nebeneinander und sind gegeneinander wärmeisoliert, um eine Wärmeübertragung entgegen der Strömungsrichtung der Heizungsluft 15 zu verhindern.

Die beiden Wärmetauscherkerne 34a, 34b sind auf einer Seite 35 des Gehäuses 33 an ihren Enden 36a, 36b jeweils mit einer Gehäuseöffnung 37a, 37b verbunden, die durch eine Trenneinrichtung 38 voneinander getrennt sind. An ihren anderen Enden 39a, 39b sind die Wärmetauscherkerne 34a, 34b mit einer gemeinsamen Öffnung 40 verbunden. Die in Figur 7 dargestellten Pfeile 7, 21 für den Kühlmittelstrom geben einen Einsatz in einem Kühl- und Heizungskreislauf 1 gemäß den Figuren 1, 4 und 5 wieder. Die beiden durch die Trenneinrichtung 38 getrennten Öffnungen 37a, 37b dienen jeweils als Einlaß für getrennte Kühlmittelströme, wobei der in Figur 7 rechte eintretende Kühlmittelstrom 21 eine niedrige Strömungsrate und der in Figur 7 linke Kühlmittelstrom 7 eine hohe Strömungsrate aufweist. Die gemeinsame Öffnung 40 der Wärmetauscherkerne 34a, 34b dient als deren gemeinsamer Auslaß und ist an den Kühlmitteleintritt 14 der Brennkraftmaschine 2 anschließbar. Die Heizungsluft 15 strömt, wie aus Figur 7 ersichtlich ist, zuerst durch den Wärmetauscherkern 34b mit der hohen Durchströmungsrate und anschließend durch den wärmetauscherkern 34a mit der niedrigen Durchströmungsrate.

Im (nicht dargestellten) Fall eines Kühl- und Heizungskreislaufes 1 gemäß Figur 6 ist die gemeinsame (in Figur 7 untere) Öffnung 40 durch das Ventil 30 in Figur 6 geschlossen. Die linke 37b der beiden durch die Trenneinrichtung 38 getrennten Öffnungen dient dann als Auslaß für den durch die rechte Öffnung 37a eintretenden Kühlmittelstrom. Der Kühlmittelstrom fließt also durch den in Figur 7 rechten Wärmetauscherkern 34a zur gemeinsamen, geschlossenen Öffnung 40, an dieser vorbei und durch den linken Wärmetauscherkern 34b wieder zurück.

## Patentansprüche

1. Verfahren zum Heizen eines Kraftfahrzeug-Fahrgastraumes, insbesondere beim Kaltstart oder bei ähnlichen Bedingungen, wobei das Kraftfahrzeug eine mit Kühlmittel gekühlte Brennkraftmaschine (2) sowie einen Kühl- und Heizungskreislauf (1) mit einem ersten Heizungs-Wärmetauscher (6) und mit einer zwischen Brennkraftmaschine (2) und ersten Heizungs-Wärmetauscher (6) geschalteten Kühlmittel-Heizeinrichtung (5) aufweist, wobei mindestens ein zweiter Heizungs-Wärmetauscher (8) vorgesehen wird und zu dem ersten Heizungs-Wärmetauscher (6) ein Kühlmittelstrom (21) mit einer ersten Temperatur und zu dem zweiten Heizungs-Wärmetauscher (8) ein Kühlmittelstrom mit einer zweiten Temperatur, die niedriger als die erste Temperatur ist, geleitet wird und die Kühlmittelströme dann der Brennkraftmaschine (2) wieder zugeführt werden, wobei die Fahrgastraum-Heizungsluft (15) zuerst durch den zweiten (8) und anschließend durch den ersten (6) Heizungs-Wärmetauscher geleitet wird, und wobei der aus der Brennkraftmaschine (2) austretende Kühlmittelstrom (4) vor der Kühlmittel-Heizeinrichtung (5) in einen ersten Kühlmittelstrom (21) mit niedriger Strömungsrate, der der Kühlmittel-Heizeinrichtung (5) und dem ersten Heizungs-Wärmetauscher (6) zugeleitet wird, und in einen zweiten Kühlmittelstrom (7) mit hoher Strömungsrate geteilt wird, der dem zweiten Heizungs-Wärmetauscher (8) zugeleitet wird.

2. Verfahren nach Anspruch 1, **dadurch gekennzeichnet, daß** der aus der Brennkraftmaschine (2) austretende Kühlmittelstrom (4) nach dem Durchströmen der Kühlmittel-Heizeinrichtung (5) und des ersten Heizungs-Wärmetauschers (6) zu dem zweiten Heizungs-Wärmetauscher (8) geleitet wird.

3. Verfahren nach einem der Ansprüche 1 oder 2, **dadurch gekennzeichnet, daß** mit steigender Kühlmitteltemperatur die Strömungsrate durch die Kühlmittel-Heizeinrichtung (5) hindurch erhöht wird.

4. Kühl- und Heizungskreislauf (1) für Kraftfahrzeuge mit einer durch Kühlmittel gekühlten Brennkraftmaschine (2), deren Kühlmittel über eine Kühlmittel-Heizeinrichtung und einen dieser nachgeschalteten ersten Heizungs-Wärmetauscher (6) zirkuliert,
wobei zu der Kühlmittel-Heizeinrichtung (5) und dem dieser nachgeschalteten, ersten Heizungs-Wärmetauscher (6) ein zweiter Heizungs-Wärmetauscher (8) parallelgeschaltet ist, daß beide Heizungs-Wärmetauscher mit dem Kühlmitteleintritt (14) der Brennkraftmaschine (2) verbunden sind,
wobei die Strömungsrate des Kühlmittels durch die Kühlmittel-Heizeinrichtung (5) und den ersten Heizungs-Wärmetauscher (6) geringer ist als die durch den zweiten Heizungs-Wärmetauscher (8), und
wobei die Fahrgastraum-Heizungsluft (15) zuerst den zweiten Heizungs-Wärmetauscher (8) und anschließend den ersten Heizungs-Wärmetauscher (6) durchströmt.

5. Kühl- und Heizungskreislauf (1) für Kraftfahrzeuge mit einer durch Kühlmittel gekühlten Brennkraftmaschine (2), deren Kühlmittel über eine Kühlmittel-Heizeinrichtung (5) und einen dieser nachgeschalteten ersten Heizungs-Wärmetauscher (6) zirkuliert,
wobei ein zweiter Heizungs-Wärmetauscher (8) vorgesehen ist, dessen Kühlmitteleintritt mit dem Kühlmittelaustritt (3) der Brennkraftmaschine (2) sowie dem (9) des ersten Heizungs-Wärmetauschers (6) und dessen Kühlmittelaustritt (10) mit dem Kühlmitteleintritt (14) der Brennkraftmaschine (2) verbunden ist,
wobei die Strömungsrate des Kühlmittels durch die Kühlmittel-Heizeinrichtung (5) und den ersten Heizungs-Wärmetauscher (6) geringer ist als die durch den zweiten Heizungs-Wärmetauscher (8), und
wobei die Fahrgastraum-Heizungsluft (15) zuerst den zweiten Heizungs-Wärmetauscher (8) und anschließend den ersten Heizungs-Wärmetauscher (6) durchströmt.

6. Kühl- und Heizungskreislauf nach Anspruch 4 oder 5, **dadurch gekennzeichnet, daß** die Strömungsrate des Kühlmit:tels durch die Kühlmittel-Heizeinrichtung (5) und den ersten Heizungs-Wärmetauscher (6) etwa 1/10 der Strömungsrate des Kühlmittels durch den zweiten Heizungs-Wärmetauscher (8) beträgt.

7. Kühl- und Heizungskreislauf nach einem der Ansprüche 4 bis 6, **dadurch gekennzeichnet, daß** zwischen Kühlmittel-Heizeinrichtung (5) und erstem Heizungs-Wärmetauscher (6) ein thermostatisch oder elektronisch gesteuertes Drosselventil (26) geschaltet ist.

8. Kühl- und Heizungskreislauf nach einem der Ansprüche 4 bis 6, **dadurch gekennzeichnet, daß** ein Dreiwege-Ventil (22) vorgesehen ist, dessen erster Einlaß (23) mit dem Kühlmittelaustritt der Kühlmittel-Heizeinrichtung (5) und dessen zweiter Einlaß (24) mit dem Kühlmittelaustritt (3) der Brennkraftmaschine (2) verbunden ist und dessen Auslaß (25) mit dem Kühlmitteleintritt des zweiten Heizungs-Wärmetauschers (8) verbunden ist.

9. Kühl- und Heizungskreislauf (1) für Kraftfahrzeuge mit einer durch Kühlmittel gekühlten Brennkraftmaschine (2), deren Kühlmittel über eine Kühlmittel-Heizeinrichtung (5) und einen dieser nachgeschalteten ersten Heizungs-Wärmetauscher (6) zirkuliert, wobei dem ersten Heizungs-Wärmetauscher (6) ein zweiter Heizungs-Wärmetauscher (8) nachgeschaltet ist, und wobei die Fahrgastraum-Heizungsluft (15) zuerst den zweiten Heizungs-Wärmetauscher (8) und anschließend den ersten Heizungs-Wärmetauscher (6) durchströmt.

10. Heizungs-Wärmetauscher zur Verwendung in einem der vorhergehenden Verfahren oder in einem der vorhergehenden Kühl- und Heizungskreisläufe verwerdet, mit zwei in einem gemeinsamen Gehäuse (33) angeordneten, nebeneinander liegenden, gegeneinander wärmeisolierten Wärmetauscherkernen (34a, 34b) mit ersten und zweiten Enden (36a, 36b; 39a, 39b), wobei das Gehäuse (33) eine erste und eine zweite Öffnung (37a, 37b), die jeweils zum ersten Ende (36a, 36b) eines der Wärmetauscherkerne (34a, 34b) führen und durch eine Trenneinrichtung (38) voneinander getrennt sind,
wobei das Gehäuse (33) eine dritte, für die zweiten Enden (39a, 39b) der Wärmetauscher (34a, 34b) gemeinsame Öffnung (40) aufweist.

## Claims

1. Method for heating a vehicle passenger compartment, in particular in the event of a cold start or other similar conditions wherein the vehicle has an internal combustion engine cooled with a cooling medium and a cooling and heating circuit with a heating heat exchanger (i) and with a cooling medium heating device connected between internal combustion engine (2) and heating heat exchanger (i) wherein at least one second heating heat exchanger (8) is provided and a cooling medium flow (21) with a first temperature is fed to the first heating heat exchanger (6) and a cooling medium flow with a second temperature which is lower than the first temperature is fed to the second heating heat exchanger (8) and the cooling medium flows are then fed to the internal combustion engine (2) again wherein the passenger compartment heating air (15) is firstly fed through the second (8) and then through the first (6) heating heat exchanger and wherein the cooling medium flow (4) leaving the internal combustion engine (2) before the cooling medium heating device (5) is fed into a first cooling medium flow (21) with a low flow rate which is fed to the cooling medium heating device (5) and the first heating heat exchanger (6) and is divided into a second cooling medium flow (7) with a high flow rate which is fed to the second heating heat exchanger (8).

2. Method according to Claim 1 **characterised in that** the cooling medium flow (4) leaving the internal combustion engine (2) after flowing through the cooling medium heating device (5) and the first heating heat exchanger (6) is fed to the second heating heat exchanger (8).

3. Method according to one of the Claims 1 or 2 **characterised in that** with increasing cooling medium temperature the flow rate through the cooling medium heating device (5) is increased.

4. Cooling and heating circuit for vehicles with an internal combustion engine cooed by cooling medium whose cooling medium is circulated via a cooling medium heating device and a heating heat exchanger connected after this,
wherein a second heating heat exchanger (8) is connected in parallel to the cooling medium heating device (5) and the first heating heat exchanger (6) connected after this, that both heating heat exchangers are connected to the cooling medium inlet (14) of the internal combustion engine (2),
wherein the flow rate of the cooling medium through the cooling medium heating device (5) and the first heating heat exchanger (6) is lower than that through the second heating heat exchanger (8), and
wherein the passenger compartment heating air (15) firstly flows through the second heating heat exchanger (8) and then the first heating heat exchanger (6).

5. Cooling and heating circuit (i) for vehicles with an internal combustion engine (2) cooled by cooling medium whose cooling medium is circulated via a cooling medium heating device and a heating heat exchanger (6) connected after this,
wherein a second heating heat exchanger (8) is provided whose cooling medium inlet is connected to the cooling medium outlet (3) of the internal combustion engine (2) and that (9) of the first heating heat exchanger (6) and its cooling medium outlet (10) is connected to the cooling medium inlet (14) of the internal combustion engine (2),
wherein the flow rate of the cooling medium through the cooling medium heating device (5) and the first heating heat exchanger (6) is less than that through the second heating heat exchanger (8), and
wherein the passenger compartment heating air (15) firstly flows through the second heating heat exchanger (8) and then the first heating heat exchanger (6).

6. Cooling and heating circuit according to Claim 4 or 5 **characterised in that** the flow rate of the cooling medium through the cooling medium heating device (5) and the first heating heat exchanger (6) is approximately 1/10 of the flow rate of the cooling medium through the second heating heat exchanger (8).

7. Cooling and heating circuit according to one of the Claims 4 to 6 **characterised in that** a thermostatically or electronically controlled throttle valve (26) is connected between cooling medium heating device (5) and the first heating heat exchanger (6).

8. Cooling and heating circuit according to one of the Claims 4 to 6 **characterised in that** a three-way valve (22) is provided whose first inlet (23) is connected to the cooling medium outlet of the cooling medium heating device (5) and whose second inlet (24) is connected to the cooling medium outlet (3) of the internal combustion engine (2) and whose outlet (25) is connected to the cooling medium inlet of the second heating heat exchanger (8).

9. Cooling and heating circuit for vehicles with an internal combustion engine cooled by cooling medium whose cooling medium is circulated via a cooling medium heating device and a heating heat exchanger connected after this wherein a second heating heat exchanger (8) is subsequently connected to the heating heat exchanger (6) and wherein the passenger compartment heating air (15) firstly flows through the second heating heat exchanger (8) and then the first heating heat exchanger (6).

10. Heating heat exchanger for use in one of the preceding methods or in one of the preceding cooling and heating circuits, with two heat insulated heat exchanger cores (34a, 34b) lying beside one another and arranged in a common case (33) with first and second ends (36a, 36b; 39a, 39b) wherein the case (33) has a first and a second opening (37a, 37b) which lead respectively to the first end (36a, 36b) of one of the heat exchanger cores (34a, 34b) and are separated from each other by a separating device (38), the case (33) has a third common opening (40) for the second ends (39a, 39b) of the heat exchangers (34a, 34b).

## Revendications

1. Procédé pour chauffer un habitacle de véhicule automobile, plus particulièrement lors du démarrage à froid ou dans des conditions similaires, moyennant quoi le véhicule comporte un moteur à combustion interne (2) refroidi par un liquide de refroidissement ainsi qu'un circuit de chauffage et de refroidissement (1) avec un premier échangeur de chaleur (6) et un dispositif de chauffage du liquide de refroidissement (5) monté entre le moteur à combustion interne (2) et un premier échangeur de chaleur (6), moyennant quoi il est prévu au moins un deuxième échangeur de chaleur (8) et un flux de liquide de refroidissement (21), avec une première température, acheminé au premier échangeur de chaleur (6) et un flux de liquide de refroidissement avec une deuxième température qui est inférieure à la première température, acheminé au deuxième échangeur de chaleur (8), lesdits flux de liquide de refroidissement retournant ensuite vers le moteur à combustion interne (2), moyennant quoi l'air de chauffage (15) de l'habitacle étant tout d'abord acheminé à travers le deuxième (8) puis à travers le premier échangeur de chaleur (6) et moyennant quoi le flux de liquide de refroidissement (4) sortant du moteur à combustion interne (2) est séparé avant le dispositif de chauffage du liquide de refroidissement (5), en un premier flux de liquide de refroidissement (21) ayant un débit faible qui est acheminé vers le dispositif de chauffage du liquide de refroidissement (5) et le premier échangeur de chaleur (6), et en un deuxième flux de liquide de refroidissement (7) ayant un débit élevé, qui est acheminé vers le deuxième échangeur de chaleur (8).

2. Procédé selon la revendication 1, **caractérisé en ce que** le flux de refroidissement (4) sortant du moteur à combustion interne (2) est acheminé, après avoir traversé le circuit du dispositif de chauffage du liquide de refroidissement (5) et du premier échangeur de chaleur (6), vers le deuxième échangeur de chaleur (8).

3. Procédé selon l'une des revendications 1 ou 2, **caractérisé en ce que** lorsque la température du liquide de refroidissement augmente, le débit est augmenté en conséquence via le dispositif de chauffage du liquide de refroidissement (5).

4. Circuit de refroidissement et de chauffage et (1) pour véhicules automobiles avec un moteur à combustion interne (2) refroidi par un liquide de refroidissement, lequel liquide de refroidissement circule via un dispositif de chauffage du liquide de refroidissement et un premier échangeur de chaleur (6) monté après celui-ci,
moyennant quoi un deuxième échangeur de chaleur (8), est monté en parallèle au dispositif de chauffage du liquide de refroidissement (5) et au premier échangeur de chaleur (6) monté après celui-ci, de telle sorte que les deux échangeurs de chaleur sont reliés à l'entrée du liquide de refroidissement (14) du moteur à combustion (2),
moyennant quoi le débit du liquide de refroidissement passant par le dispositif de chauffage du liquide de refroidissement (5) et le premier échangeur de chaleur (6) est inférieur au débit passant par le deuxième échangeur de chaleur (8), et
moyennant quoi l'air de chauffage (15) de l'habitacle circule tout d'abord à travers le deuxième échangeur de chaleur (8) puis à travers le premier échangeur de chaleur (6).

5. Circuit de refroidissement et de chauffage et (1) pour véhicules automobiles avec un moteur à combustion interne (2) refroidi par un liquide de refroidissement, lequel liquide de refroidissement circule via un dispositif de chauffage du liquide de refroidissement (5) et un premier échangeur de chaleur (6) monté après celui-ci,
moyennant quoi il est prévu un deuxième échangeur de chaleur (8), dont l'entrée du liquide de refroidissement est reliée à la sortie du liquide de refroidissement (3) du moteur à combustion (2) ainsi qu'à celle (9) du premier échangeur de chaleur (6) et dont la sortie de liquide de refroidissement (10) est reliée à l'entrée de liquide de refroidissement (14) du moteur à combustion (2),
moyennant quoi le débit du liquide de refroidissement passant par le dispositif de chauffage du liquide de refroidissement (5) et le premier échangeur de chaleur (6) est inférieur au débit passant par le deuxième échangeur de chaleur (8), et
moyennant quoi l'air de chauffage (15) de l'habitacle circule tout d'abord à travers le deuxième échangeur de chaleur (8) puis à travers le premier échangeur de chaleur (6).

6. Circuit de refroidissement et de chauffage selon la revendication 4 ou 5, **caractérisé en ce que** le débit du liquide de refroidissement passant par le dispositif de chauffage du liquide de refroidissement (5) et le premier échangeur de chaleur (6) représente environ le 1/10 du débit du liquide de refroidissement passant par le deuxième échangeur de chaleur (8).

7. Circuit de refroidissement et de chauffage selon l'une des revendications 4 à 6, **caractérisé en ce qu'**entre le dispositif de chauffage du liquide de refroidissement (5) et le premier échangeur de chaleur (6) est montée une soupape à étranglement (26) à commande thermostatique ou électronique.

8. Circuit de refroidissement et de chauffage selon l'une des revendications 4 à 6, **caractérisé en ce qu'**il est prévu une soupape à trois canaux (22) dont la première entrée (23) est reliée à la sortie du liquide de refroidissement du dispositif de chauffage (5) du liquide de refroidissement, dont la deuxième entrée (24) est reliée à la sortie du liquide de refroidissement (3) du moteur à combustion interne (2) et dont la sortie (25) est reliée à l'entrée du liquide de refroidissement du deuxième échangeur de chaleur (8).

9. Circuit de refroidissement et de chauffage (1) pour véhicules automobiles avec un moteur à combustion interne (2) refroidi par un liquide de refroidissement, lequel liquide de refroidissement circule via un dispositif de chauffage du liquide de refroidissement (5) et un premier échangeur de chaleur (6) monté après celui-ci, moyennant quoi un deuxième échangeur de chaleur (8) est monté après le premier échangeur de chaleur (6) et moyennant quoi l'air de chauffage (15) de l'habitacle circule tout d'abord à travers le deuxième échangeur de chaleur (8) puis à travers le premier échangeur de chaleur (6).

10. Echangeur de chaleur destiné à être utilisé dans un des précédents procédés ou dans un des précédents circuits de chauffage et de refroidissement, employé avec deux noyaux d'échangeur de chaleur (34a, 34b) placés l'un à côté de l'autre dans un boîtier commun (33), isolés thermiquement l'un vers l'autre, avec une première et une deuxième extrémités (36a, 36b ; 39a, 39b), moyennant quoi le boîtier (33) comporte une première et une deuxième ouvertures (37a, 37b) qui mènent respectivement à la première extrémité (36a, 36b) d'un des noyaux d'échangeur de chaleur (34a, 34b) et sont séparées l'une de l'autre par un dispositif de séparation (38),
moyennant quoi le boîtier (33) comporte une troisième ouverture commune (40) pour les deuxièmes extrémités (39a, 39b) des échangeurs de chaleur (34a, 34b).
